# EUROPEAN PATENT APPLICATION

(11) **EP 2 056 235 A1**
(43) Date of publication of application: **06.05.2009**
(21) Application number: 07119856.8
(22) Date of filing: 02.11.2007
(51) Int. Cl.: G06K 9/00, G01S 11/12

(54) **Driving path identification via online adaptation of the driving path model**

(71) Applicant: Honda Research Institute Europe GmbH, 63073 Offenbach/Main (DE)
(72) Inventor: Heckmann, Martin, 60316 Frankfurt (DE); Fritsch, Jan Nikolaus, 63179 Oberhausen (DE); Michalke, Thomas Paul, 64283 Darmstadt (DE)
(74) Representative: Rupp, Christian

(57) **Abstract**

The invention relates to a method for generating a driving path and/or surrounding model in a driver assistance system of a vehicle, comprising the steps of:
- feeding signals from sensors of the vehicle to the driver assistance system,
- generating a driving path and/or surrounding model based on the sensor signals,
- storing generated driving path and/or surrounding models, and
- adapting the driving path model generated on the basis of the sensor signals based on at least one past stored driving path and/or surrounding model where the information on which part of the region previously classified as driving path was traversed by the vehicle serves as ground truth for the adaptation.

## Description

### Field of Invention

The present invention relates to a technique for adaptively improving the identification of the driving path as deployed in driver assistance systems.

Driver assistance systems are control systems for vehicles or intelligent vehicle technologies that aim at increasing the comfort and safety of traffic participants. Potential applications of such systems include lane departure warning, lane keeping, collision warning or avoidance, adaptive cruise control and low speed automation in congested traffic.

Driver assistance systems in the context of the present invention can thereby "assist" an action triggered or performed by a driver, but can also autonomously start and carry out a control action for the vehicle.

The driver assistance system can be provided with information on the environment of the vehicle, the status of the vehicle and the driver.

The application of the invention which will be used for illustration purposes in the present specification is the car domain. However the invention is not limited to this, but can also be applied to other domains as the control of airplanes in the take off or landing phase.

### Background

Driver assistance systems are already a very valuable support for the driver and will be even more so in the coming years. One prerequisite for their proper functioning is the correct identification of the driving path in an input sensor field (e.g. a camera), respectively the road in the case of a car application. This is a very difficult task as a very wide range of illumination conditions (e.g. direct sunlight, shadow, headlights) and types of driving paths (e.g. highway vs. country road or dust road) have to be covered.

Different prior art approaches for identifying the driving path exist. Most of them rely on the detection of lane markings combined with a model of the course of the road (see E. D. Dickmanns and A. Zapp: A Curvature-Based Scheme for Improving Road Vehicle Guidance by Computer Vision. Proceedings of the SPIE Conference on Mobile Robots, vol. 727, 1986, pp. 161-168, Wang et al.: Lane detection and tracking using B-Snake, Image and Vision Computing, vol. 22, 2004, pp. 269-280,).

US6813370 teaches a lane recognition apparatus for recognizing lane markers on a road surface based on a pair of stereo images of a scene in front of an own vehicle obtained from a stereoscopic camera, includes a stereo image processing means for calculating distance information of an image based on the pair of the images, a lane detecting means for detecting a lane marker of a lane in the image based on brightness information of the image and distance information calculated by the stereo image processing means and a lane position recognition means for recognizing a position of the lane marker in real space based on a position of the lane marker detected by the lane detecting means and distance information calculated by the stereo image processing means.

These approaches are clearly restricted to driving paths with clear markings. More recent approaches combine these lane markings with additional features as for example texture and color and integrate them in a probabilistic way (see U. Franke et al.: Lane Recognition on Country Roads, Proceedings of the 2007 IEEE Intelligent Vehicles Symposium, 2007, pp. 99-104, T. Dang et al.: Path Planning for Autonomous Driving Based on Stereoscopic and Monoscopic Vision Cues, Proc. of IEEE International Conference on Multisensor Fusion and Integration for Intelligent Systems, 2006, pp. 191-196). These approaches are also able to track roads without clear markings.

### Invention

The present invention proposes to improve the driving path identification via an adaptive process. This adaptive process can either be controlled via information gathered from the driving history or some optimization criterion.

This object is achieved by the features of the independent claims. The dependent claims develop further the central idea of the present invention.

The invention proposes a method for generating a driving path and/or surrounding model in a driver assistance system of a vehicle, comprising the steps of:
- feeding signals from sensors of the vehicle to the driver assistance system,
- generating a driving path and/or surrounding model based on the sensor signals,
- storing generated driving path and/or surrounding models, and
- adapting the driving path model generated on the basis of the sensor signals based on at least one past stored driving path and/or surrounding model.

The sensor signals may comprise video signals.

Information from a satellite-based navigation system may be used to generate sensor signals.

The navigation signal may be used to either provide a priori information on the possible location of the road in the image or as an improvement of the information gathered via the driving path history.

Properties of the physical characteristics of the sensors can be adapted based on the currently valid driving path model.

The orientation of a sensor may be changed depending on the course of the driving path found in the previous images.

The external sensors can be cameras and the exposure time, aperture, or the white balance of the cameras may be adapted based on the results of the previous driving path identification.

A cost function, external sensor data (e.g. GPS), the path history, and a priori knowledge on possible locations of the driving path in the image can be used to adapt the driving path model.

The cost function deployed to adapt the driving path model can be the maximization of the homogeneity of the segmented regions.

The cost function can be based on the minimization of the variance in the segmented regions.

Another aspect of the invention relates to a driver assistance computing unit

Still another aspect relates to a vehicle being provided with such a driver assistance computing unit.

A computer program product can implement such a method when run on a computing unit.

A still further aspect of the present invention relates to a driver assistance system with a driving path and/or surrounding model generation apparatus, the model generation apparatus comprising:
- at least one sensor for supplying environmental signals to the driver assistance system,
- computing means for generating a driving path and/or surrounding model based on the sensor signals,
- storing means for the generated driving path and/or surrounding models, and
- means for adapting the driving path model generated on the basis of the sensor signals based on at least one past stored driving path and/or surrounding model the driver assistance system using the adapted driving path model for carrying out a driver assistance action.

Further features, objects and advantages of the present invention will become evident when reading the following detailed description of preferred unlimiting embodiments of the invention when taken in conjunction with the figures of the enclosed drawings.
- Fig.1: illustrates the initialization of the driving path model (road model).
- Fig.2: illustrates the increase of the confidence of the model after traverse of a segment of the driving path.
- Fig.3: illustrates the additional adaptation of the model of the surrounding ("non road model").
- Figure: 4 shows in a block diagram how the different aspects of the invention could be implemented into a system for driving path identification, and
- Figure: 5 shows a block diagram for applying a cost function for the adaptation.

As a consequence of the rapidly changing environment while driving on open roads a static driving path model is not suitable as it cannot capture all the possible variations satisfactorily. Adapting the model to the current situation is much more promising.

As one aspect of the invention it is proposed to use the e.g. immediate driving history to adapt the current model of the driving path. It is assumed that the driver stays on the driving path in most of the cases. Hence it is possible to perform an ex-post identification of the driving path after it has been traversed.

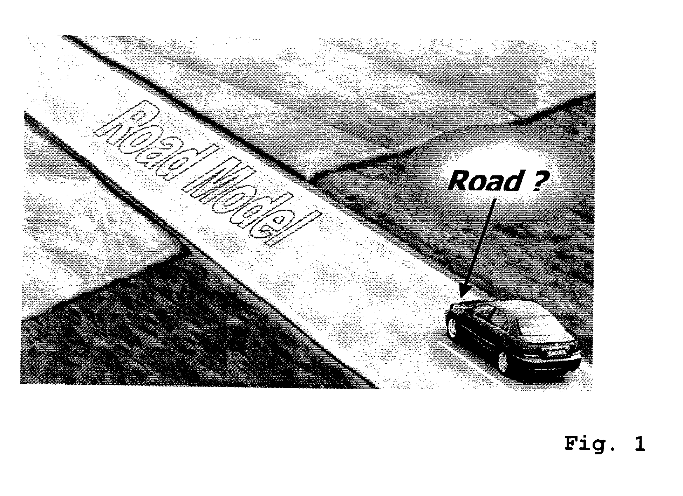

Assume that e.g. an image sensor signal for a camera is taken. Based on this sensor signal a driving path model is generated and the current model of the driving path is applied to perform a segmentation of the image in driving path and surrounding (compare Fig. 1). Such segmentation of a video input signal is known as such. A well known approach is region based segmentation (see Jähne, Digital Image Processing, Springer 2005). The iterative approach aims at the improvement of the connectivity of image regions. For this the approach works on image feature maps, resulting from filter operations with filter masks, which form and size is adapted to the potential iteratively refined object boundary. The principle is to work on features (instead of using the image pixels directly), which connects all image pixels within the neighborhood defined by the filter kernel.

Another possible pixel oriented driving path segmentation approach that is based on normalized histograms is destribed in Franke,U., Loose,H., Koeppel,C.: Lane Recognition on Country Roads, In: Intelligent Vehicles Symposium, pp. 99-104, 2007.

Interpreting the path the driver has chosen and making the assumption he/she stayed on the desired path it is possible to use this information to refine the previous model and hence improve the segmentation in driving path and surrounding on the previously taken image. The driving path the vehicle has been traveled in the past can always be taken as a true driving path and never as surrounding.

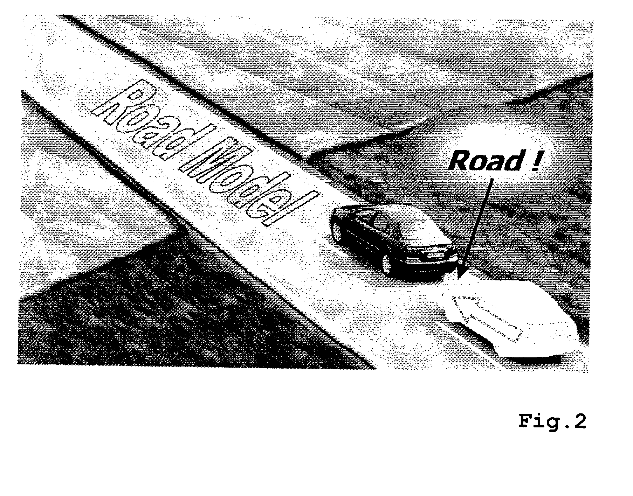

Making the additional assumption that the environmental conditions did only slightly change from the previous image to the current one the adapted model will now also allow a better segmentation of the current image (compare Fig 2). Once the car has moved a bit further the process can be repeated and the model adapted to the new situation. Thereby it is possible to continuously adapt the driving path model of the vehicle's driver assistance system to changing environments.

According to a second aspect of the invention the adaptation of the driving path model is based on more cost functions. Instead or in addition of using the information on the traversed region it is also possible to perform an adaptation which has as its objective to minimize a cost function in the feature space. This cost function can be the maximization of the homogeneity of the segmentation, i.e. the aim is to obtain connected regions where all pixels are either classified to belong to the driving path or the background.

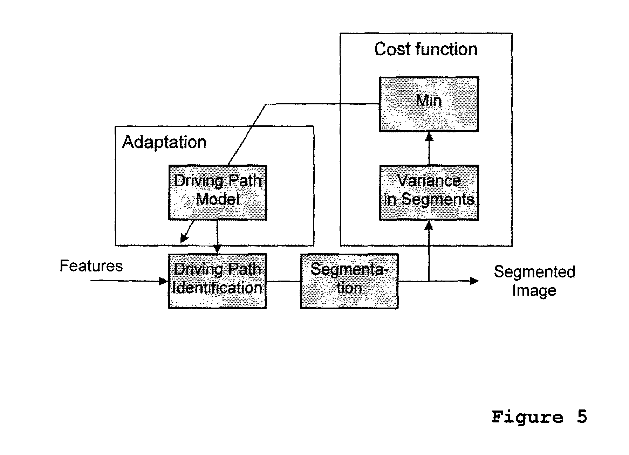

The concrete implementation of the cost function can then be based on the minimization of the variance in the segments. Suppose image pixels are labeled in a continuum from 0 for belonging to the background to 1 for belonging to the driving path (compare Fig. 5). Based on a threshold or more advanced processes segments can then be formed. For each of these segments then the variance in the segment can be calculated. The objective of the adaptation would then be to have all pixels belonging to a background segment as labeled with 0 and the pixels in the driving path segments labeled with 1. While doing so additional regularization terms have to be applied in order to avoid trivial solutions where e.g. all pixels in the image have the same value.

Such an adaptation process can be initialized via a priori knowledge on the possible location of the driving path in the image. This a priori information can either be of very general nature as that the road can be expected in the lower part of the image or be provided by additional external sensors. A GPS based car navigation system including detailed road maps could be one such external sensor. The GPS information can also be combined beneficially with the previously mentioned information on the traversed path.

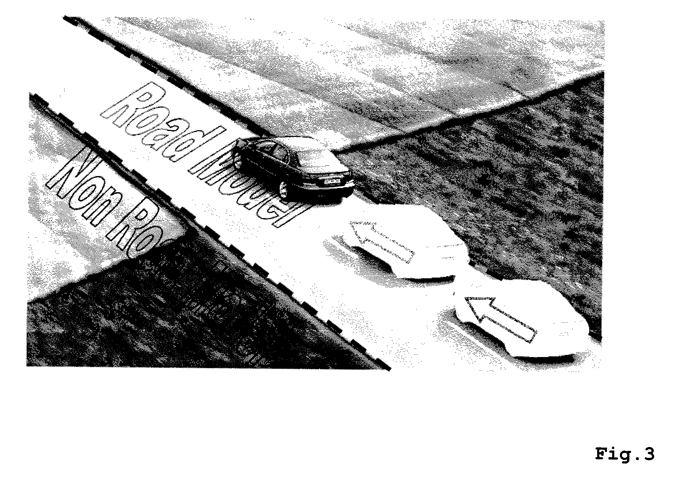

According to a third aspect of the invention it is proposed to use the previously mentioned principles to also adapt the model of the surrounding (compare Fig. 3). By doing so the segmentation accuracy can be improved as the model of the surrounding can be used to stabilize the driving path model in situations where the road conditions change drastically but the characteristics of the surroundings are less variable.

According to a fourth aspect of the invention it is proposed not only to adapt the internal model of the driving path, but also characteristics of the sensors, such as e.g. the orientation and parameterization of the sensors. Therefore the driving path model can be used to control actuators for controlling the positioning e.g. of a camera sensor.

Following the two adaptation principles outlined before it is also possible to adapt the sensors, either to change their orientation in order to anticipate the course of the road or their parameters as for example the exposure time of the camera.

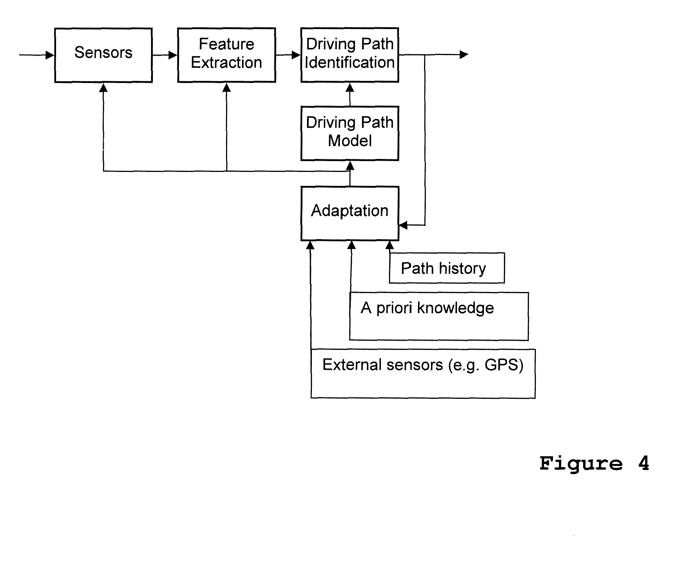

In Fig. 4 an exemplary implementation of the different aspects of the invention into a system for driving path identification is given in from of a block diagram.

## Claims

1. A method for generating a driving path and/or surrounding model in a driver assistance system of a vehicle,
comprising the steps of:
- feeding signals from sensors of the vehicle to the driver assistance system,
- generating a driving path and/or surrounding model based on the sensor signals,
- storing generated driving path and/or surrounding models, and
- adapting the driving path model generated on the basis of the sensor signals based on at least one past stored driving path and/or surrounding model where the information on which part of the region previously classified as driving path was traversed by the vehicle serves as ground truth for the adaptation.

2. The method according to claim 1,
wherein the sensor signals comprise video signals.

3. The method according to any of the preceding claims,
wherein information from a satellite-based navigation system is used to generate sensor signals.

4. The method according to claim 3,
wherein the navigation signal is used to either provide a priori information on the possible location of the road in the image or as an improvement of the information gathered via the driving path history.

5. The method according to any of the preceding claims,
wherein properties of the physical characteristics of the sensors are adapted based on the currently valid driving path model.

6. A method according to claim 5,
wherein the orientation of a sensor is changed depending on the course of the driving path found in the previous images.

7. A method according to claim 5 or 6,
wherein the external sensors are cameras and the exposure time, aperture, or the white balance of the cameras is adapted based on the results of the previous driving path identification.

8. A method that uses a general cost function and a priori knowledge on possible locations of the driving path in the image to adapt the driving path model.

9. The method according to claim 8,
where the cost function deployed to adapt the driving path model is the maximization of the homogeneity of the segmented regions.

10. The method according to claim 9,
wherein the cost function is based on the minimization of the variance in the segmented regions.

11. A driver assistance computing unit designed to carry out a method according to any of the preceding claims.

12. A vehicle being provided with a driver assistance computing unit according to claims 11.

13. A computer program product,
implementing a method according to any of claims 1 to 10 when run on a computing unit.

14. A driver assistance system with a driving path and/or surrounding model generation apparatus, the model generation apparatus comprising:
- sensors for supplying environmental signals to the driver assistance system,
- computing means for generating a driving path and/or surrounding model based on the sensor signals,
- storing means for the generated driving path and/or surrounding models, and
- means for adapting the driving path model generated on the basis of the sensor signals based on at least one past stored driving path and/or surrounding model the driver assistance system using the adapted driving path model for carrying out a driver assistance action.

15. The system according to claim 14,
wherein the sensors comprise video cameras.

16. The system according to claim 14 or 15, comprising a satellite-based navigation system for generating environmental signals.

17. The system according to any of claims 14 to 16, comprising means for changing properties of the physical characteristics of the sensors based on the currently valid driving path model.

18. The system according to claim 17, comprising means for changing the orientation of the sensors depending on the course of the driving path found in the previous images.

19. The system according to claims 17 or 18,
wherein the external sensors are cameras and the exposure time, aperture, or the white balance of the cameras is adapted based on the results of the previous driving path identification.
